# EUROPEAN PATENT APPLICATION

(11) **EP 3 799 023 A2**
(43) Date of publication of application: **31.03.2021**
(21) Application number: 20197053.0
(22) Date of filing: 18.09.2020
(51) Int. Cl.: G09G 3/34, G09G 3/36

(54) **DISPLAY DEVICE AND CONTROLLING METHOD THEREOF**

(30) Priority: 25.09.2019 KR 20190117915
(71) Applicant: Samsung Electronics Co., Ltd., Gyeonggi-do 16677 (KR)
(72) Inventor: KANG, Minwoo, 16677 Gyeonggi-do (KR); MIN, Kwansik, 16677 Gyeonggi-do (KR); KO, Suhong, 16677 Gyeonggi-do (KR); LEE, Dongjun, 16677 Gyeonggi-do (KR)
(74) Representative: Walaski, Jan Filip

(57) **Abstract**

A display device includes a liquid crystal panel configured to display an image corresponding to image data; a backlight unit including a first light source configured to emit blue light and a second light source configured to emit yellow light; and a controller configured to determine first color coordinates and second color coordinates based on a color gamut of the image data corresponding to a local dimming area, control the backlight unit based on the first color coordinates, and control the liquid crystal panel based on the second color coordinates.

## Description

### BACKGROUND

### 1. Field

The disclosure relates to a display device and a controlling method thereof, and more particularly, to a display device and a controlling method thereof for performing local dimming control.

### 2. Discussion of Related Art

In general, display devices are an output device for visually presenting image information received or stored for a user, and are used in various areas such as homes or businesses.

For example, there are various display devices such as monitor devices connected to personal computers (PCs) or server computers, portable computer systems, global positioning system (GPS) terminals, general television sets, Internet protocol televisions (IPTVs), portable terminals, e.g., smart phones, tablet PCs, personal digital assistants (PDAs), and cellular phones, or any other display device for reproducing images, or for use in various kinds of audio/video systems.

A display panel may include pixels arranged in the form of a matrix and thin film transistors (TFTs) provided for the respective pixels. An amount of light passing through the pixels or emitting from the pixels may be changed depending on image signals applied to the TFTs. The display device may display an image by adjusting the amounts of light emitted from the respective pixels of the display panel.

The display panel for displaying an image may be classified into an emissive display panel that emits light by itself based on the image, and a non-emissive display panel that blocks or passes light emitted from an extra light source.

The non-emissive display panel typically includes a liquid crystal display (LCD) panel. The LCD panel may include a backlight unit for emitting light and a liquid crystal panel for blocking or passing the light emitted from the backlight unit.

The LCD panel uses a dimming technology to control the backlight unit to increase the contrast ratio and reduce power consumption. The dimming technology may be classified into global dimming and local dimming to be locally controlled.

The LCD panel is controlled with gray levels, e.g., RGB values such as (250, 120, 30), to represent color of an image. A common LCD panel is controlled with different gray levels to represent color. For example, the LCD panel may represent color by combining a red (R) value at a high gray level, a green (G) value at a middle gray level, and a blue (B) value at a low gray level. In this case, an RGB mixture ratio when the LCD panel is viewed from the front differs from an RGB mixture ratio when the LCD panel is viewed from a side. That is, color of an image on the LCD panel recognized by the user may vary depending on a viewing angle of the user.

### SUMMARY

Provided are a display device and a controlling method thereof that may represent image data with little change in property according to a viewing angle and improve a contrast ratio by performing color local dimming as well as brightness local dimming on a backlight unit.

In accordance with an aspect of the disclosure, there is provided a display device including: a liquid crystal panel configured to display an image corresponding to image data; a backlight unit including a first light source configured to emit blue light and a second light source configured to emit yellow light; and a controller configured to determine first color coordinates and second color coordinates based on a color gamut of the image data corresponding to a local dimming area, control the backlight unit based on the first color coordinates, and control the liquid crystal panel based on the second color coordinates.

The controller may be configured to determine color coordinates of the blue light corresponding to the first color coordinates and color coordinates of the yellow light corresponding to the first color coordinates, based on the color gamut and a predefined criterion.

The controller may be further configured to determine the second color coordinates of the liquid crystal panel based on the first color coordinates.

The controller may be further configured to control the backlight unit based on brightness of the image data.

The controller may be further configured to determine color coordinates of the blue light corresponding to the first color coordinates and color coordinates of the yellow light corresponding to the first color coordinates, based on a gray level value of white light determined in manufacturing of the liquid crystal panel.

The backlight unit may include the first light source and the second light source in a single chip.

The backlight unit may further include a light guide plate configured to diffuse the blue light and the yellow light emitted by the first light source and the second light source, respectively, and guide the blue light and the yellow light toward the liquid crystal panel.

In accordance with an aspect of the disclosure, there is provided a display device including: a liquid crystal panel configured to display an image corresponding to image data; a backlight unit including a first light source configured to emit blue light, a second light source configured to emit red light, and a third light source configured to emit green light; and a controller configured to determine first color coordinates and second color coordinates based on a color gamut of the image data corresponding to a local dimming area, control the backlight unit based on the first color coordinates, and control the liquid crystal panel based on the second color coordinates.

The controller may be further configured to control the backlight unit such that the determined first color coordinates included in the color gamut are emitted.

The controller may be further configured to determine the second color coordinates of the liquid crystal panel based on the first color coordinates.

The controller may be further configured to control the backlight unit based on brightness of the image data.

The controller may be further configured to determine color coordinates of the blue light corresponding to the first color coordinates, color coordinates of the red light corresponding to the first color coordinates, and color coordinates of the green light corresponding to the first color coordinates, based on a gray level value of white light determined in manufacturing of the liquid crystal panel.

In accordance with an aspect of the disclosure, there is provided a method of controlling a display device, the display device including a first light source configured to emit first color light and a second light source configured to emit second color light, the method including: receiving image data; analyzing a color gamut of the image data corresponding to a local dimming area; determining first color coordinates and second color coordinates based on the color gamut of the image data corresponding to the local dimming area; controlling the first light source and the second light source based on the first color coordinates; and controlling a liquid crystal panel of the display device based on the second color coordinates.

The determining may further include determining the first color coordinates based on the color gamut and a predefined criterion.

The determining may further include determining the second color coordinates based on the first color coordinates.

The controlling the first light source and the second light source may include controlling the first light source and the second light source based on brightness of the image data.

The method may further include storing a gray level value of white light determined in manufacturing of the liquid crystal panel, and the determining may include determining the second color coordinates based on the stored gray level value of the white light.

The first light source may be configured to emit blue light and the second light source may be configured to emit yellow light, and the determining the first color coordinates may include determining color coordinates of the blue light and color coordinates of the yellow light.

The first light source may be configured to emit a blue light, and the second light source may be configured to emit red light, and the display device may further include a third light source configured to emit green light, and the determining the first color coordinates may include determining color coordinates of the blue light, color coordinates of the red light, and color coordinates of the green light.

The controlling the first light source and the second light source may include controlling the first light source and the second light source such that the determined first color coordinates included in the color gamut are emitted from a backlight unit of the display device.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exterior view of a display device, according to an embodiment;
FIG. 2 is a graph for describing brightnesses of different gray levels that change according to a viewing angle;
FIGS. 3 and 4 are diagrams for describing a method of analyzing a color gamut of image data and controlling a backlight unit, according to an embodiment;
FIG. 5 is an exploded view of a display device, according to an embodiment;
FIG. 6 shows an example of a liquid crystal panel included in a display device, according to an embodiment;
FIG. 7 is an exploded view of a backlight unit, according to an embodiment;
FIG. 8 is a diagram for describing a light source module, according to an embodiment;
FIG. 9 is a plan view of a backlight unit, according to an embodiment;
FIG. 10 is a control block diagram of a display device, according to an embodiment;
FIG. 11 is a diagram for determining first color coordinates of color to be emitted by a backlight unit;
FIG. 12 is an exploded view of a display device, according to an embodiment;
FIG. 13 is an exploded view of a backlight unit included in a display device, according to an embodiment;
FIG. 14A is a schematic diagram of light sources to be applied to a display device, according to an embodiment;
FIG. 14B is a schematic diagram of light sources, according to an embodiment;
FIG. 15 is a view for describing a local dimming area controlled by a backlight unit;
FIG. 16 is a flowchart illustrating a controlling method of a display device, according to an embodiment; and
FIG. 17 is a flowchart illustrating a controlling method of a display device, according to an embodiment.

### DETAILED DESCRIPTION

Hereinafter, certain embodiments of a direct type backlight device and a display apparatus having the same according to the disclosure will be described in detail with reference to the accompanying drawings.

Like numerals refer to like elements throughout the specification. Not all elements of embodiments will be described, and description of what are commonly known in the art or what overlap each other in the embodiments will be omitted. The terms as used throughout the specification, such as "∼ part", "∼ module", "∼ member", "∼ block", etc., may be implemented in software and/or hardware, and a plurality of "∼ parts", "∼ modules", "∼ members", or "∼ blocks" may be implemented in a single element, or a single "∼ part", "∼ module", "∼ member", or "∼ block" may include a plurality of elements.

It will be further understood that the term "connect" or its derivatives refer both to direct and indirect connection, and the indirect connection includes a connection over a wireless communication network.

The term "include (or including)" or "comprise (or comprising)" is inclusive or open-ended and does not exclude additional, unrecited elements or method steps, unless otherwise mentioned.

Throughout the specification, when it is said that a member is located "on" another member, it implies not only that the member is located adjacent to the other member but also that a third member exists between the two members.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section.

Further, the terms 'leading end', 'rear end', 'upper side', 'lower side', 'top end', 'bottom end', etc. used in the disclosure are defined with reference to the drawings. However, the shape and position of each component are not limited by the terms.

It is to be understood that the singular forms "a," "an," and "the" include plural references unless the context clearly dictates otherwise.

Reference numerals used for method steps are only used for convenience of explanation, but not to limit an order of the steps. Thus, unless the context clearly dictates otherwise, the written order maybe practiced otherwise.

The principle and embodiments will now be described with reference to accompanying drawings.

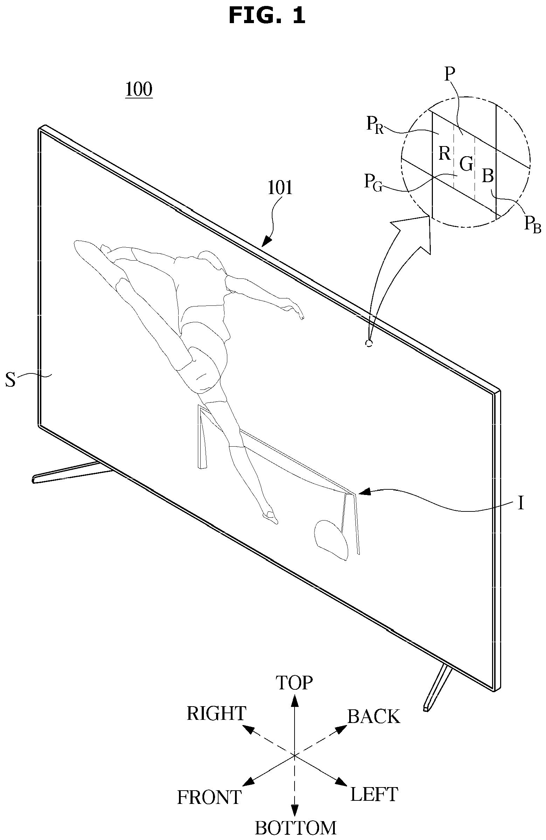

FIG. 1 is an exterior view of a display device, according to an embodiment.

A display device 100 is a device for processing image signals received from the outside and visually presenting the processed image. In the following description, it is assumed that the display device 100 is a television (TV), but embodiments are not limited thereto. For example, the display device 100 maybe implemented in various forms, such as a monitor, a portable multimedia device, a portable communication device, a portable operation device, or any device capable of visually presenting an image, without being limited to the above examples.

The display device 100 may be a large format display (LFD) located outdoor such as on a rooftop of a building or at a bus stop. The display device 100 is not, however, limited to being located outdoor, but may be located at any place, even indoor. For example, the display device 100 may be located in a place with heavy foot traffic, e.g., at a subway station, a shopping mall, a theater, an office, a store, etc.

The display device 100 may receive a video signal and/or an audio signal from various content sources and output video and/or audio corresponding to the video and/or audio signals. For example, the display device 100 may receive television (TV) broadcast content through a broadcast receiving antenna or a cable, receive content from a content reproducing device, or receive content from a content providing server of a content provider.

The display device 100 may include a main body 101 for accommodating a plurality of components for displaying an image, and a screen S positioned on one side of the main body 101.

The main body 101 forms an exterior of the display device 100, and the components of the display device 100 to display an image I on the screen S may be included in the main body 101. Although the main body 101 of FIG. 1 is shaped like a flat plate, the main body 101 is not limited thereto. For example, the main body 101 may have a curved form with left and right end portions relatively protruding forward and the other parts curved backward.

The screen S may be formed on the front of the main body 101 for displaying visual information, e.g., the image I. For example, the screen S may display a still image or a moving image in two dimension (2D) or three dimension (3D).

A plurality of pixels P are formed on the screen S, and the image I to be displayed on the screen S may be formed by a combination of light emitted by the plurality of pixels P. For example, the light emitted by the plurality of pixels P may be combined like a mosaic into the image I on the screen S.

Each of the pixels P may emit light in various colors and brightnesses.

To emit light with different brightness, each of the pixels P may include an element (e.g., an organic light emitting diode (OLED)) that may emit light itself or an element (e.g., a liquid crystal panel) capable of passing or blocking light illuminated by a light source, e.g., a backlight unit.

Each of the pixels P may include subpixels P_{R}, P_{G}, and P_{B} to emit different colors of light.

The subpixels P_{R}, P_{G}, and P_{B} may include a red subpixel P_{R} to emit red light, a green subpixel P_{G} to emit green light, and blue subpixel P_{B} to emit blue light. For example, the red light may have wavelengths of about 620 nanometers (nm, a billionth of a meter) to about 750 nm; green light may have wavelengths of about 495 nm to about 570 nm; blue light may have wavelengths of about 450 nm to about 495nm.

By combinations of the red light of the red subpixel P_{R}, the green light of the green subpixel P_{G}, and the blue light of the blue subpixel P_{B}, each of the pixels P may emit various brightnesses and colors of light.

The display device 100 may include various types of display panels for displaying the image I. For example, the display device 100 may include a liquid crystal display (LCD) panel, a light emitting diode (LED) panel, an OLED panel, or the like. As an example of the display device 100, the LCD panel will now be described. However, this is for illustrative purposes only and the display device 100 is not limited thereto.

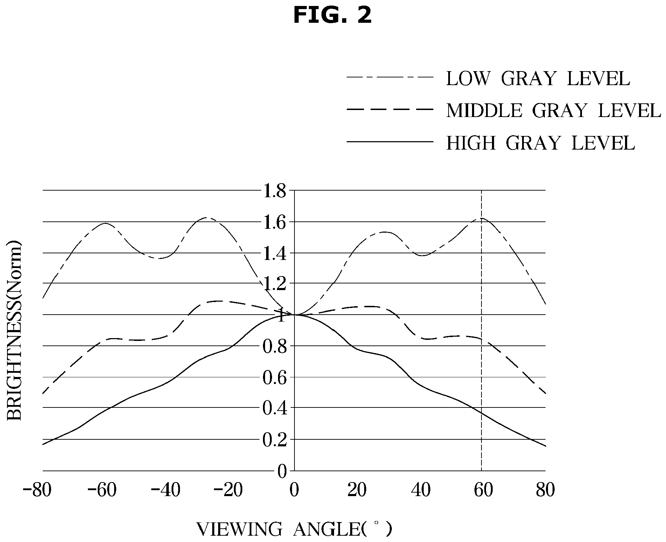

FIG. 2 is a graph for describing brightnesses of different gray levels that change according to a viewing angle. In the graph of FIG. 2, an X-axis represents viewing angles (°), and a Y-axis represents brightness (Norm).

In general, when a user who views the display device 100 is in front of the display device 100, the viewing angle is 0°. When the user views the display device 100 while moving to a left direction of the display device 100, the viewing angle changes in a positive (+) direction, and when the user views the display device 100 while moving to a right direction of the display device 100, the viewing angle changes in a negative (-) direction.

A related art LCD device provides different gray levels to the red, green, and blue colors to represent color of image data. For example, the related art LCD device may represent color with a high gray level value (R value), a middle gray level value (G value), and a low gray level value (B value). For example, the display device may represent color corresponding to gray level values (250, 120, 30). However, as seen in the graph of FIG. 2, the gray level values (250, 120, 30) may correspond to gray level values (100, 108, 48) at a viewing angle of 60°, and may remain at the gray level values (250, 120, 30) at a viewing angle 0°. Specifically, when the display device presents color with different gray levels, a gray level mixture ratio when the display device is viewed right from the front of the display device is different from a gray level mixture ratio when the display device is viewed from a side of the display device, and the user views an image in different color from a side than that viewed from the front.

Such a color difference depending on the viewing angle causes degradation of image quality of the display device.

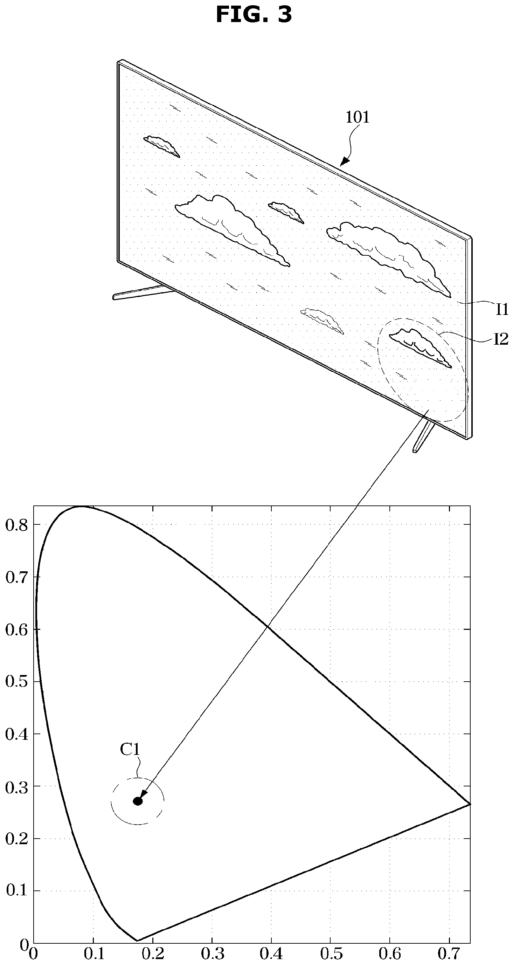

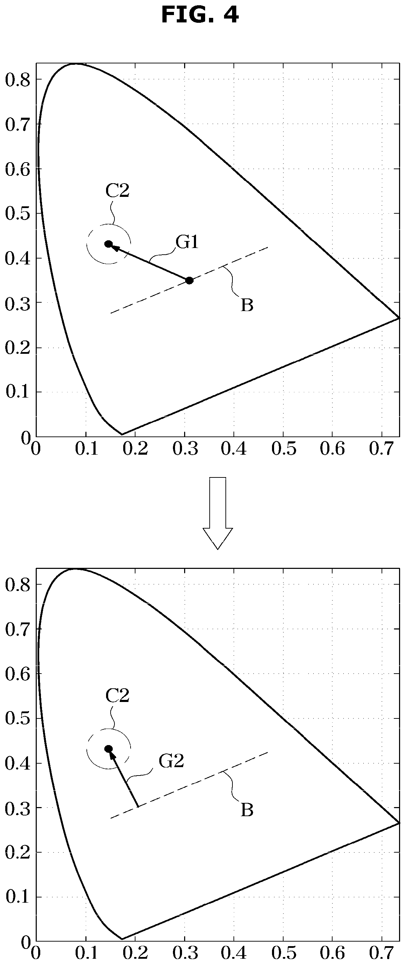

FIGS. 3 and 4 are diagrams for describing a method of analyzing a color gamut of image data and controlling a backlight unit, which is performed by a display device, according to an embodiment. The embodiment will be described in connection with FIGS. 3 and 4 together to avoid overlapping explanation.

Referring to FIG. 3, the display device 100 receives image data from an external entity and displays an image corresponding to the image data. For example, the image data received by the display device 100 may represent an image I1 of a sky with clouds. The display device 100 analyzes the image data and determines a color to be distributed in a majority portion of an area I2, the area I2 corresponding to a local dimming area in the image I1. Specifically, the display device 100 may determine that the color to be distributed in the majority portion of the area I2 corresponding to the local dimming area is blue.

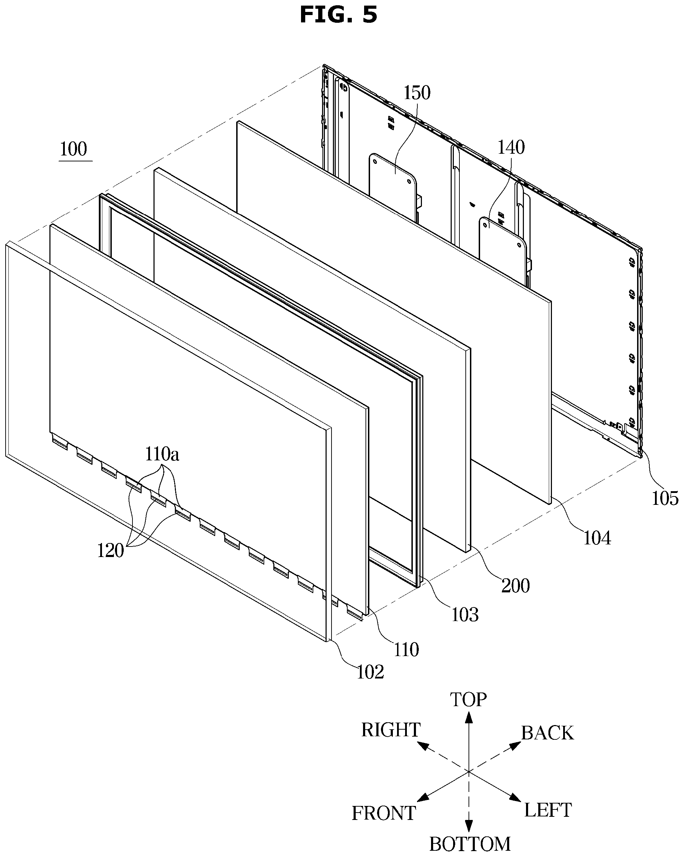

The display device 100 determines a color gamut C1 including blue color defined by a standard of an international organization, and performs color dimming and local dimming for a backlight unit 200 (see FIG. 5) to represent the color gamut C1.

Referring to FIG. 4, the display device 100 may include the backlight unit 200 including e.g., a first light source for emitting blue light and a second light source for emitting yellow light, and color coordinates (hereinafter, first color coordinates) of color emitted by the backlight unit 200 may be determined in a straight line B as shown in FIG. 4.

In general, for the display device 100, the first color coordinates may be established for the backlight unit 200 to emit white light. However, when a color gamut C2 of the local dimming area is as shown in FIG. 4, the color to be displayed on a liquid crystal panel 110 (see FIG. 5) and the white color of light emitted by the backlight unit 200 may have a significant difference G1 in a gray level.

The display device 100 may change the first color coordinates for the backlight unit 200 to emit color included in or approximate to the color gamut C2 analyzed from the image data. For example, the display device 100 may determine the first color coordinates for the backlight unit 200 to emit color most closely approximate to the color gamut C2 in the line B having colors the backlight unit 200 is able to emit. Accordingly, the display device 100 may reduce a gray level difference from the difference G1 to a difference G2 and thus reduce occurrences of color distortion due to the difference in a viewing angle.

The color gamut of the local dimming area I2 of the image data is analyzed and then the first color coordinates of color to be emitted by the backlight unit 200 is adjusted. Accordingly, an effect of having a striking contrast ratio between the local dimming area I2 and remaining areas displayed on the display device 100 may be achieved. The display device 100 may enhance the contrast ratio with the remaining areas by reducing a color gamut that may otherwise be presented unnecessarily in the local dimming area I2.

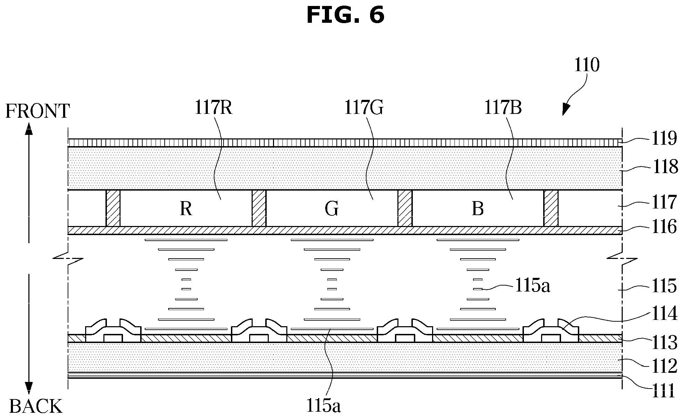

FIG. 5 is an exploded view of a display device, according to an embodiment. FIG. 6 shows an example of a liquid crystal panel included in a display device, according to an embodiment.

Referring to FIG. 5, different kinds of components to produce the image I on the screen S maybe provided in the main body 101.

For example, the backlight unit 200 for emitting surface light forward, the liquid crystal panel 110 for blocking or passing the light emitted from the backlight unit 200, a control assembly 140 for controlling operations of the backlight unit 200 and the liquid crystal panel 110, and a power assembly 150 for supplying power to the backlight unit 200 and the liquid crystal panel 110 are provided in the main body 101. Furthermore, a bezel 102, a frame middle mold 103, a bottom chassis 104, and a rear cover 105 may be further provided in the main body 101 to support and secure the liquid crystal panel 110, the backlight unit 200, the control assembly 140, and the power assembly 150.

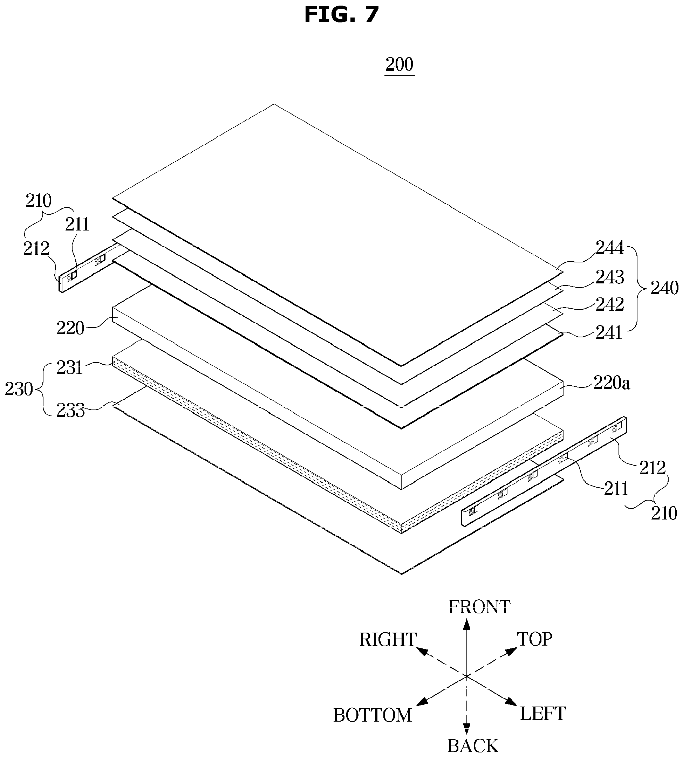

In an embodiment, the backlight unit 200 may include point light sources for emitting blue light and yellow light, and may refract, reflect, and/or scatter the light emitted from the point light sources to convert the light to uniform surface light. For example, the backlight unit 200 may include a light source module (or a light source) 210 (see FIG. 7) having a first light source for emitting blue light and a second light source for emitting yellow light in a single chip, a light guide plate 220 (see FIG. 7) on which the light is incident from the light source module 210 and which diffuses the incident light, a reflecting sheet 233 (see FIG. 7) for reflecting light emitted from the rear face of the light guide plate 220, and an optical sheet 240 for refracting and scattering light emitted from the front face of the light guide plate 220.

A structure and operation(s) of the backlight unit 200 will be described in more detail later.

The liquid crystal panel 110 is arranged in front of the backlight unit 200 for blocking or passing the light emitted from the backlight unit 200 to produce the image I.

The front face of the liquid crystal panel 110 constitutes the aforementioned screen S of the display device 100, and may include the plurality of pixels P. The plurality of pixels P included in the liquid crystal panel 110 may separately block or pass the light from the backlight unit 200, and the light having passed the plurality of pixels forms the image I to be displayed on the screen S.

For example, as shown in FIG. 6, the liquid crystal panel 110 may include a first polarizer film 111, a first transparent substrate 112, a pixel electrode 113, a thin film transistor (TFT) 114, a liquid crystal layer 115, a common electrode 116, a color filter 117, a second transparent substrate 118, and a second polarizer film 119.

The first transparent substrate 112 and the second transparent substrate 118 may securely support the pixel electrode 113, the TFT 114, the liquid crystal layer 115, the common electrode 116, and the color filter 117. The first and the second transparent substrates 112 and 118 may include tempered glass or transparent resin.

On the outer surfaces of the first and the second transparent substrates 112 and 118, the first and the second polarizer films 111 and 119 are applied, respectively.

The first and the second polarizer films 111 and 119 may each pass particular light while blocking the other light.

Light may have a pair of an electric field and a magnetic field oscillating in different directions perpendicular to a traveling direction of the light. The electric field and the magnetic field of the light may oscillate in all directions perpendicular to the traveling direction of the light, and the oscillating directions of the electric field and the magnetic field may be perpendicular to each other.

For example, the first polarizer film 111 passes light having a magnetic field oscillating in a first direction while blocking the other lights. The second polarizer film 119 passes light having a magnetic field oscillating in a second direction while blocking the other lights. The first and the second directions may be perpendicular to each other. In other words, a polarization direction of light passing through the first polarizer film 111 and an oscillation direction of light passing through the second polarizer film 119 are perpendicular to each other. As a result, the light may not generally penetrate both the first and the second polarizer films 111 and 119 at the same time.

The color filter 117 may be arranged on an inner side (or a lower surface) of the second transparent substrate 118.

The color filter 117 may include a red color filter 117R for passing red light, a green color filter 117G for passing green light, and a blue color filter 117B for passing blue light, and the red, green, blue color filters 117R, 117G, and 117B may be arranged side by side.

An area in which the color filter 117 is formed corresponds to the pixel P as described above. Furthermore, an area where the red color filter 117R is formed corresponds to the red subpixel PR; an area where the green color filter 117G is formed corresponds to the green subpixel PG; an area where the blue color filter 117B is formed corresponds to the blue subpixel PB.

The TFTs 114 are arranged inside the first transparent substrate 112. For example, the TFTs 114 maybe arranged at locations corresponding to borders between the red color filter 117R, the green color filter 117G, and the blue color filters 117B.

The TFT 114 may pass or block current flowing in the pixel electrode 113, which will be described later. For example, depending on whether the TFT 114 is turned on (closed) or turned off (opened), an electric field may be formed or removed from between the pixel electrode 113 and the common electrode 116.

The TFT 114 may include poly-silicon, and may be provided using a semiconductor process, such as lithography, deposition, or ion implantation process.

The pixel electrode 113 may be provided on an inner side (or a top surface) of the first transparent substrate 112, and the common electrode 116 may be provided inside of the liquid crystal panel 110 from the second transparent substrate 118.

The pixel electrode 113 and the common electrode 116 include a conductive metal material, and may produce an electric field to change arrangement of liquid crystal molecules 115a, which will be described below.

The pixel electrodes 113 may be separately formed in the areas corresponding to the red, the green, and the blue color filters 117R, 117G, and 117B, and the common electrode 116 may extend from one side to the other side of the liquid crystal panel 110. In other words, the plurality of pixel electrodes 113 arranged in the same row may share the single common electrode 116. As a result, an electric field may be selectively produced in the liquid crystal layer 115 depending on the position of the pixel electrode 113.

The pixel electrode 113 and the common electrode 116 may include a transparent material to pass the incident light from the outside. For example, the pixel electrode 113 and the common electrode 116 may also include indium tin oxide (ITO), indium zinc oxide (IZO), silver (Ag) nano-wire, carbon nano-tube (CNT), graphene, or 3,4-ethylenedioxythiophene (PEDOT).

The liquid crystal layer 115 is provided between the pixel electrode 113 and the common electrode 116, and filled with the liquid crystal molecules 115a.

A liquid crystal is in an intermediate state between solid (crystal) and fluid. Generally, when heat is applied to materials, the materials are phase-changed from a solid state to a transparent liquid state at a temperature above melting points of the materials. By contrast, when heat is applied to a liquid crystal substance in a solid state, the liquid crystal substance changes to an opaque and muddy liquid and then into a transparent liquid state. Most liquid crystal materials are organic compounds, the molecules of which are shaped like thin and long rods, and the arrangement of the liquid crystal molecules are irregular in a direction and regular in another direction. As a result, the liquid crystal has both fluidity of a liquid and optical anisotropy of a crystal (solid).

Furthermore, the liquid crystal has an optical property that depends on a change in an electric field. For example, the liquid crystal may have varying directions of arrangement of molecules that form the liquid crystal, according to a change in an electric field.

When an electric field is produced in the liquid crystal layer 115, the liquid crystal molecules 115a of the liquid crystal layer 115 are arranged along the direction of the electric field, and otherwise when no electric field is produced in the liquid crystal layer 115, the liquid crystal molecules 115a may be arranged irregularly or arranged along an alignment layer (not shown).

Consequently, the optical property of the liquid crystal layer 115 may be changed according to whether there is an electric field passing the liquid crystal layer 115.

For example, in a case of twisted nematic (TN) liquid crystal panel, the liquid crystal molecules 115a are spirally arranged, and light may be able to pass the liquid crystal panel 110 due to the arrangement of the liquid crystal molecules 115a of the liquid crystal layer 115 unless an electric field is produced in the liquid crystal layer 115. On the other hand, when an electric field is produced in the liquid crystal layer 115, the liquid crystal molecules 115a are arranged to be perpendicular to the transparent substrates 22 and 28, which prevents the light from passing the liquid crystal panel 110.

In another example, in a case of vertical alignment (VA) liquid crystal panel, the liquid crystal molecules 115a are arranged to be perpendicular to the transparent substrates 22 and 28, and light may be unable to pass the liquid crystal panel 110 due to the arrangement of the liquid crystal molecules 115a in the liquid crystal layer 115 unless an electric field is produced in the liquid crystal layer 115. When an electric field is produced in the liquid crystal layer 115, the liquid crystal molecules 115a are arranged to be parallel to the transparent substrates 22 and 28, which allows the light to pass the liquid crystal panel 110.

In another example, as for an in-plane-switching (IPS) liquid crystal panel, the liquid crystal molecules 115a may be arranged to be parallel to the transparent substrates 22 and 28. For the IPS liquid crystal display, both the pixel electrode 113 and the common electrode 116 are provided on the first transparent substrate 112, and an electric field in a direction parallel to the transparent substrates 22 and 28 may be produced in the liquid crystal layer 115. Depending on whether an electric field is produced in the liquid crystal layer 115, the light may pass the liquid crystal panel 110 or may be blocked by the liquid crystal panel 110.

On one side of the liquid crystal panel 110 provided are a cable 110a for transmitting image data to the liquid crystal panel 110 and a display driver integrated circuit (DDI) 120 (hereinafter, called a 'driver IC') for processing digital image data to output an analog image signal.

The cable 110a may electrically connect between the control assembly 140 and/or the power assembly 150 and the driver IC 120, and further between the driver IC 120 and the liquid crystal panel 110. The cable 110a may include a bendable flexible flat cable or film cable.

The driver IC 120 may receive image data and power from the control assembly 140 and the power assembly 150 through the cable 110a, respectively, and transmit image data and driving current to the liquid crystal panel 110 through the cable 110a.

Furthermore, the cable 110a and the driver IC 120 may be integrally implemented as a film cable, a chip on film (COF), a table carrier package (TCP), etc. In other words, the driver IC 120 may be arranged on the cable 110a. The driver IC 120 is not, however, limited thereto, and the driver IC 120 may be arranged on the liquid crystal panel 110.

The control assembly 140 may include a control circuit for controlling operations of the liquid crystal panel 110 and the backlight unit 200. The control circuit may process image data received from an external content source, transmit image data to the liquid crystal panel 110, and transmit dimming data to the backlight unit 200.

Specifically, the control assembly 140 determines second color coordinates of color transmitted by the liquid crystal panel 110 for displaying image data while transmitting dimming data including color dimming and brightness dimming as described above in connection with FIG. 4. As described above in connection with FIG. 4, the backlight unit 200 changes the first color coordinates of color to be emitted by the backlight unit 200. However, even if the color coordinates of the backlight unit 200 are changed, unless gray level values to display an image corresponding to image data on the liquid crystal panel 110 are not changed, the display device 100 may display a different image than the received image data. Accordingly, the control assembly 140 may reduce color distortion due to difference in a viewing angle and enhance the contrast ratio while displaying an image corresponding to the received image data, by adjusting the second color coordinates of color to be displayed by the liquid crystal panel 110 based on the first color coordinates of color to be emitted by the backlight unit 200.

The power assembly 150 may supply power to the backlight unit 200 for the backlight unit 200 to output surface light and supply power to the liquid crystal panel 110 for the liquid crystal panel 110 to block or pass the light from the backlight unit 200.

The control assembly 140 and the power assembly 150 may be implemented with printed circuit boards (PCBs) and various circuits mounted on the PCBs. For example, a power circuit may include a power circuit board, and a capacitor, a coil, a resistor, a processor, etc., which are mounted on the power circuit board. Furthermore, the control circuit may include a control circuit board with a memory and a processor mounted thereon.

The aforementioned liquid crystal panel is not limited to the embodiment in connection with FIG. 6. For example, the display device 100 may include a liquid crystal panel equipped with a fluorescent substance or quantum dots (QDs), and may absorb blue light and yellow light emitted from the backlight unit 200 for color conversion. Specifically, the disclosure is applicable as long as the display device 100 adjusts color dimming for the backlight unit 200 and the second color coordinates for the liquid crystal panel 110, and various modifications may be made to the details of the liquid crystal panel 110 described above in another embodiment.

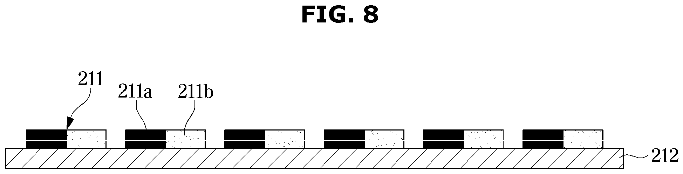

FIG. 7 is an exploded view of a backlight unit, according to an embodiment, and FIG. 8 is a diagram for describing a light source module, according to an embodiment.

Referring to FIG. 7, the backlight unit 200 may include the light source module 210 for emitting light, a light guide plate 220 for diffusing light, a local dimming unit 230 for selectively refracting and/or reflecting light, and an optical sheet 240 for enhancing brightness of light.

The light source module 210 may include a plurality of light sources 211 for emitting light, and a supporting body 212 for supporting the plurality of light sources 211.

The plurality of light sources 211 may be arranged on a side of the light guide plate 220 and may emit light toward the center of the light guide plate 220. In an embodiment, to make the brightness of the incident light on the light guide plate 220 uniform, the plurality of light sources 211 maybe placed equidistantly. For example, as shown in FIG. 7, the plurality of light sources 211 may be arranged at regular intervals on a left side and a right side of the light guide plate 220. The arrangement of the plurality of light sources 211 is not, however, limited thereto. For example, the plurality of light sources 211 may be arranged on a top side and a bottom side of the light guide plate 220 or on one of the left and the right sides of the light guide plate 220.

Referring to FIG. 8, the plurality of light sources 211 may each be provided as a single chip including a first light source 211a that emits blue light and a second light source 211b that emits yellow light. For example, the first and the second light sources 211a and 211b may employ low calorific LEDs or cold cathode fluorescent lamps (CCFL).

The supporting body 212 may fix the first and the second light sources 211a and 211b to prevent the light sources 211 from being moved. Furthermore, power maybe supplied to the first and the second light sources 211a and 211b through the supporting body 212.

The supporting body 212 may be located on a side of the light guide plate 220 along with the plurality of light sources 211. For example, as shown in FIG. 7, the supporting body 212 may be placed on the left side of the light guide plate 220. The arrangement of the supporting body 212 is not, however, limited thereto. For example, the supporting body 212 may be arranged on the top and the bottom sides of the light guide plate 220 or on one of the left and the right sides of the light guide plate 220.

The supporting body 212 may include a synthetic resin including conductive power supply lines or a printed circuit board (PCB) to fix the plurality of light sources 211 and supply power to the plurality of light sources 211.

The light guide plate 220 may change the traveling direction of light emitted from the plurality of light sources 211 arranged on the side of the light guide plate 220 to emit the light toward a front of the backlight unit 200 (that is, the front direction as shown in FIG. 7). The light emitted from the plurality of light sources 211 may be diffused up toward the center portion of the light guide plate 220, and as a result, the light guide plate 220 may emit uniform light toward the front.

A pattern may be formed on a front face 220a of the light guide plate 220 to enhance straightness of light emitted from the plurality of light sources 211. The pattern formed on the front face 220a of the light guide plate 220 may allow the light emitted from the plurality of light sources 211 to travel straight in the direction in which the light is emitted. For example, a lenticular lens may be formed on the front face 220a of the light guide plate 220 in a direction in which the light is emitted from the plurality of light sources 211, and may allow the light emitted from the plurality of light sources 211 to travel straight toward the center portion of the light guide plate 220.

The incident light entering into the light guide plate 220 may travel in various directions within the light guide plate 220 depending on the incidence angle. For example, the incident light toward the front of the light guide plate 220 may be totally reflected on the front face 20a of the light guide plate 220 to travel toward the center portion of the light guide plate 220. Furthermore, the incident light traveling backward from the light guide plate 220 may be reflected on the local dimming unit 230 placed behind the light guide plate 220 to travel toward the center portion of the light guide plate 220 or refracted (or scattered) by the local dimming unit 230 to be emitted through the front face 220a of the light guide plate 220.

By the total reflection on the front face 220a of the light guide plate 220 and reflection on the local dimming unit 230, the light may travel toward the center portion of the light guide plate 220 from an edge portion of the light guide plate 220. Furthermore, by the refraction (or scattering) at the local dimming unit 230, the light may travel forward from the light guide plate 220 through the front face 220a of the light guide plate 220.

The light guide plate 220 may include e.g., poly-methyl methacrylate (PMMA) or transparent polycarbonate (PC).

The optical sheet 240 may include various sheets to enhance brightness or uniformity of brightness of the light emitted through the front face 220a of the light guide plate 220. For example, the optical sheet 240 may include a diffuser sheet 241, a first prism sheet 242, a second prism sheet 243, and a reflective polarizer sheet 244.

The diffuser sheet 241 may diffuse light to enhance uniformity of brightness of the light emitted through the front face 220a of the light guide plate 220. The light emitted from the plurality of light sources 211 may be diffused within the light guide plate 220 and further diffused by the diffuser sheet 241.

Due to the diffusion within the diffuser sheet 241, light may be slantingly emitted from the diffuser sheet 241. Specifically, an output angle corresponding to an angle between the light emitted from the diffuser sheet 241 and a normal line of the diffuser sheet 241 maybe larger than an incidence angle corresponding to an angle between the light incident on the diffuser sheet 241 and the normal line of the diffuser sheet 241.

The first and the second prism sheets 242 and 243 may concentrate the light emitted from the diffuser sheet 241. Specifically, the first and the second prism sheets 242 and 243 may refract the light slantingly emitted from the diffuser sheet 241 to travel forward.

Each of the first and the second prism sheets 242 and 243 may have triangular prism patterns, which are arranged adjacent to each other to form a plurality of bands. In this case, the prism patterns of the first prism sheets 242 maybe arranged in a first direction, and the prism patterns of the second prism sheets 243 may be arranged in a second direction perpendicular to the first direction. Light penetrating the first and the second prism sheets 242 and 243 has a viewing angle of about 70 degrees and travels forward from the backlight unit 200, thereby enhancing brightness.

The reflective polarizer sheet 244 may be a kind of a polarizer film that may transmit some of the incident light while reflecting some other lights. For example, the reflective polarizer sheet 244 may pass the light polarized in the same direction as a predetermined polarization direction and reflect the light polarized in a different direction than the predetermined polarization direction.

In this case, the polarization direction of the reflective polarizer sheet 244 may be the same as that of the first polarizer film 111 included in the liquid crystal panel 110 as described above. As a result, the light having passed the reflective polarizer sheet 244 may also penetrate the first polarizer film 111 included in the liquid crystal panel 110.

The light reflected by the reflective polarizer sheet 244 may be recycled inside the backlight unit 200, and this light recycling may enhance brightness of the backlight unit 200.

Elements of the optical sheet 240 are not limited to the sheets or films as described above, but may include various other sheets or films such as protective sheets. Furthermore, a sequence of layering the diffuser sheet 241, the first prism sheet 242, the second prism sheet 243, and the reflective polarizer sheet 244 is not limited to what is shown in FIG. 7, but the diffuser sheet 241, the first prism sheet 242, the second prism sheet 243, and the reflective polarizer sheet 244 may be layered in various other sequences.

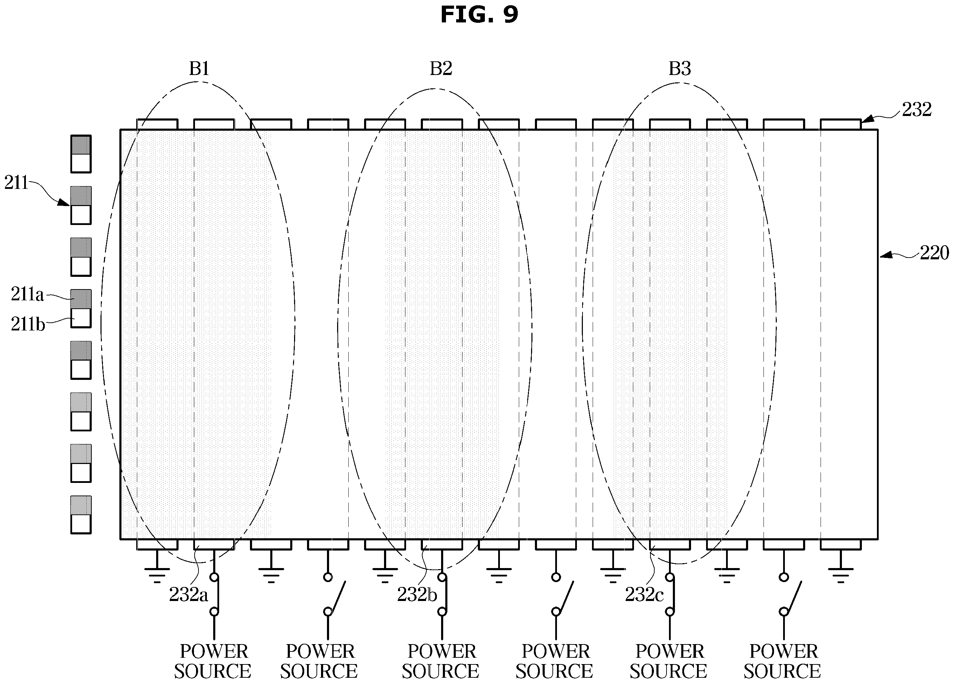

The local dimming unit 230 may include an electro-optic layer 231 having an optical property that varies according to an electric field and a plurality of electrodes 232 (see FIG. 9) for producing electric fields in the electro-optic layer 231.

The electro-optic layer 231 may be located on a rear face (that faces toward a back of the backlight unit 200) of the light guide plate 220 and formed with an electro-optic material. The electro-optic material may have an electro-optic effect. The electro-optic effect refers to a phenomenon that an optical property changes according to an electric field. Specifically, the electro-optic effect refers to a phenomenon that an optical property such as a refraction index, a phase delay, a polarization property, etc., of a material change according to whether there is an electric field and/or the intensity of the electric field.

Liquid crystal is a representative example of the electro-optic material. The liquid crystal has a refraction index and a polarization property that change according to whether there is an electric field and/or the intensity of the electric field. For example, a polymer dispersed liquid crystal (PDLC), polymer network liquid crystal (PNLC), a cholesteric liquid crystal, a smectic liquid crystal, etc., may be used for the electro-optic layer 231.

An electro-chromic material may also correspond to the electro-optic material. The electro-chromic material refers to a material whose color reversibly changes depending on an oxidation-reduction reaction caused by application of voltage. For example, tungsten oxide (WO3) may be reduced by injection of electrons, causing color of the electro-chromic material to change from colorless to blue.

An electrowetting material may also correspond to the electro-optic material. Electrowetting refers to changing surface tension of liquid by using electricity. For example, a water drops are condensed by surface tension. When electricity is supplied to the water drops, attraction between the water drops and a bottom floor (or a bottom surface) increases, making the water drops spread across the bottom floor and changing the refraction index of the water drops.

FIG. 9 is a plan view of a backlight unit, according to an embodiment.

Referring to FIG. 9, the plurality of light sources 211 maybe arranged on a side along a left edge of the light guide plate 220 and configured to emit light toward the light guide plate 220. The plurality of light sources 211 may include first light sources 211a that emit blue light and second light sources 211b that emit yellow light.

Each of the plurality of electrodes 232 may have a shape of a bar extending from top to bottom of the backlight unit 200. Specifically, the plurality of electrodes 232 may extend lengthwise in a direction perpendicular to a path along which the light emitted from the plurality of light sources 211 is propagated. Furthermore, the plurality of electrodes 232 shaped like bars extending from top to bottom of the backlight unit 200 may be arranged in parallel (e.g., side by side) in a left to right direction of the backlight unit 200. Accordingly, the plurality of electrodes 232 may cross the path along which the light emitted from the plurality of light sources 211 is propagated.

The plurality of electrodes 232 include common electrodes and signal electrodes. The common electrodes and the signal electrodes may be arranged side by side on a plane, or may be alternately arranged on a plane.

The plurality of common electrodes may be connected to the ground or may be interconnected.

The plurality of electrodes 232 include a first signal electrode 232a, a second signal electrode 232b, and a third signal electrode 232c that may separately receive a voltage to produce electric fields. When a voltage is applied to the first, the second, and the third signal electrodes 232a, 232b, and 232c, electric fields maybe produced between the signal electrodes and the neighboring common electrodes.

Areas B1, B2, and B3 in which the electric fields are produced correspond to the area I2 of the image data as described above in connection with FIG. 3. The backlight unit 200 determines a local dimming area based on production of electric fields of the local dimming unit 230.

In an embodiment, the display device 100 determines a color that is distributed the most in an area in which the electric fields are produced by the signal electrodes (that is, an area corresponding to image data). The display device 100 controls the backlight unit 200 for the light source module 210 to emit color corresponding to first color coordinates, which is closest to a color gamut including the determined color.

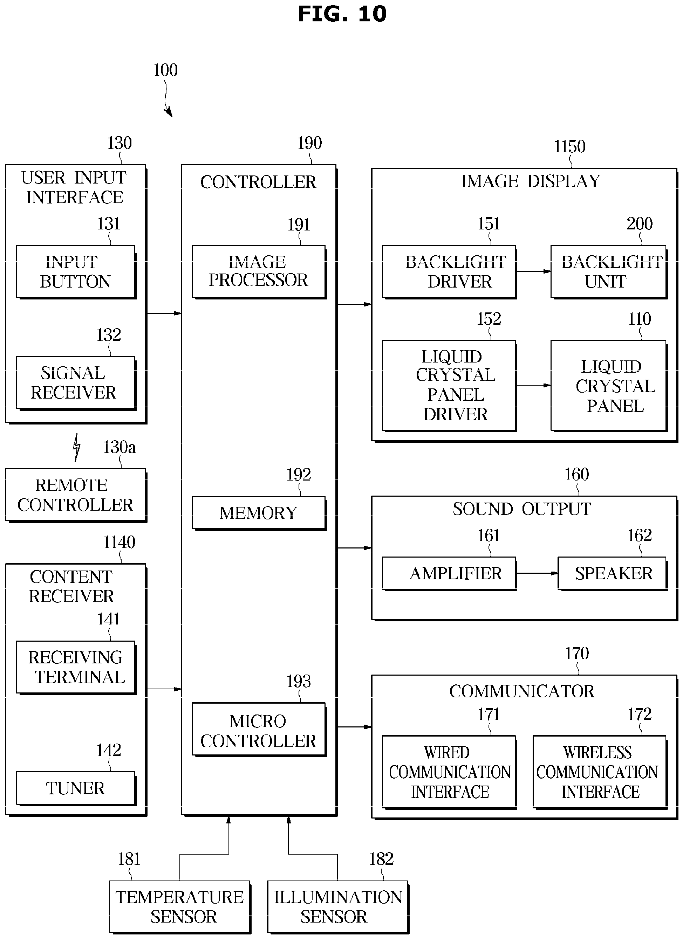

FIG. 10 is a control block diagram of a display device, according to an embodiment.

Referring to FIG. 10, the display device 100 includes a user input interface 130 for obtaining an input from the user, a content receiver 1140 for receiving image signals and/or audio signals from content sources, an image display 1150 (or a display device) for displaying image data, a sound output 160 for outputting sound, a communicator (or a communication interface) 170 for communicating with outside, a temperature sensor 181 for measuring temperature of the image display 1150, an illumination sensor 182 for measuring external intensity of illumination of the display device 100, and a controller 190 for processing image data and/or an audio signal received by the content receiver and controlling operations of the display device 100.

The user input interface 130 may include an input button 131 for obtaining a user input. For example, the user input interface 130 may include a power button for turning on or off the display device 100, a sound control button for controlling sound volume output by the display device 100, a source selection button for selecting a content source, etc.

The input button 131 may obtain a user input and output an electric signal (e.g., voltage or current) corresponding to the user input to the controller 190, and may be implemented by various input means such as a push switch, a touch switch, a dial, a slide switch, a toggle switch, etc.

The user input interface 130 may also include a signal receiver 132 for receiving a remote control signal from a remote controller 130a. The remote controller 130a for obtaining a user input may be provided separately from the display device 100 and may transmit a radio signal corresponding to the user input to the display device 100. The signal receiver 132 may receive a radio signal from the remote controller 130a, and output an electric signal (e.g., voltage or current) corresponding to the user input to the controller 190.

The content receiver 1140 may include receiving terminals 141 and a tuner 142 for receiving content including image data and/or an audio signal from the content sources.

The receiving terminals 141 may receive image data and audio signals from the content sources through cables. For example, the receiving terminals 141 may include a component (YPbPr/RGB) terminal, a composite video blanking and sync (CVBS) terminal, an audio terminal, a high definition multimedia interface (HDMI) terminal, a universal serial bus (USB) terminal, etc.

The tuner 142 may receive broadcast signals through a broadcast receiving antenna or a cable, and extract a broadcast signal on a channel selected by the user among the received broadcast signals. For example, the tuner 142 may pass a broadcast signal having a frequency corresponding to a channel selected by the user among the plurality of broadcast signals received through the broadcast receiving antenna or the cable, and block the other broadcast signals having the other frequencies.

As such, the content receiver 1140 may receive an image signal and/or an audio signal from the content sources through the receiving terminals 141 and/or the tuner 142, and transmit the image signal and/or audio signal to the controller 190.

The image display 1150 may include the backlight unit 200 and the liquid crystal panel 110 for visually presenting an image, a backlight driver 151 for driving the backlight unit 200, and a liquid crystal panel driver 152 for driving the liquid crystal panel 110.

The backlight driver 151 controls the backlight unit 200 as described above. The backlight driver 151 controls the light source module 210 to emit color based on the first color coordinates determined by the controller 190. Furthermore, the backlight driver 151 controls the local dimming unit 230 to perform local dimming.

The liquid crystal panel driver 152 may receive image data from the controller 190, and control the plurality of pixels P included in the liquid crystal panel 110 to pass or block light based on the image data.

The liquid crystal panel driver 152 may control the liquid crystal panel 110 based on the second color coordinates determined by the controller 190, and display the image data.

The sound output 160 includes a sound amplifier 161 for amplifying sound and a speaker 162 for audibly outputting the amplified sound. The speaker 162 may convert an analog sound signal amplified by the sound amplifier 161 to a sound or sound waves. For example, the speaker 162 may include a thin film that vibrates according to an electric sound signal, and the vibration of the thin film may produce sound waves.

The communicator interface 170 includes a wired communication interface 171 for communicating in a wired manner with an external device (e.g., a server) and a wireless communication interface 172 for communicating wirelessly with an external device.

The wired communication interface 171 may access a gateway through a cable connected from the display device 100 to a gateway of an Internet service provider. For example, the wired communication interface 171 may communicate with the gateway via Ethernet. The wired communication interface 171 may exchange data with a communication network via a gateway.

The wireless communication interface 172 may wirelessly communicate with an access point (AP) (or a gateway of the user) connected to a gateway of an Internet service provider. For example, the wireless communication interface 172 may communicate with the AP through Wi-Fi, Bluetooth, or Zigbee. The wireless communication interface 172 may exchange data with a communication network via an AP and a gateway.

The temperature sensor 181 may measure temperature of the backlight unit 200, and output an electric signal (e.g., voltage or current) corresponding to the temperature of the backlight unit 200 to the controller 190. The temperature sensor 181 may include a thermistor whose electric resistance is changed according to the temperature. The controller 190 may efficiently control the backlight unit 200 based on the detected temperature.

The illumination sensor 182 may measure an external intensity of illumination of the display device 100, and output an electric signal (e.g., voltage or current) corresponding to the external intensity of illumination to the controller 190. The illumination sensor 182 may include a photo diode that produces a current or a voltage according to an amount of incident light. The controller 190 may control brightness of the light emitted from the backlight unit 200 based on a detection value (e.g., the external intensity of illumination) of the illumination sensor 182 to reduce a difference in a gray level in an output image due to difference in a viewing angle.

The controller 190 includes an image processor 191 for generating image data and audio data based on a signal received through the content receiver 1140, a memory 192 for storing a program and data to be used in operations to change the first color coordinates of color to be emitted by the backlight unit 200 and the second color coordinates of image data to be displayed by the liquid crystal panel, and a micro controller 193 for controlling an operation of the display device 100 in response to a user input received through the user input interface 130.

The image processor 191 may generate image data by decoding an image signal received through the content receiver 1140, and generate sound data by decoding an audio signal received through the content receiver 1140. The image data and the sound data may be output to the image display 1150 and the sound output 160, respectively.

The image processor 191 stores the encoded image data in the memory 192 in a unit of a frame. The memory 192 may be a buffer.

The memory 192 may store a program and/or data to process image data included in content, and store temporary data generated while the image processor 191 processes the image data.

The memory 192 may include a non-volatile memory, such as a read only memory (ROM), a flash memory, and/or the like, which may store data for a long period, and a volatile memory, such as a static random access memory (SRAM), a dynamic RAM (DRAM), or the like, which may temporarily store data.

The micro controller 193 may control the display device 100 in response to a user input received through the user input interface 130.

For example, the micro controller 193 may control the tuner 142 to extract a broadcast signal on a channel selected by the user input in response to the user input for a channel change. The micro controller 193 may change a brightness, a contrast, a sharpness, a color density, a color, a gamma, a color gamut, and a chroma of the image data to be displayed in response to the user input.

The micro controller 193 performs control of local dimming of the backlight unit 200 based on image data processed by the image processor 191. Before local dimming control, the micro controller 193 analyzes the color gamut of the image data corresponding to a local dimming area, and determines color coordinates of blue light of the first light source 211a and color coordinates of yellow light of the second light source 211b to emit color included in or approximate to the analyzed color gamut. A criterion (a preset criterion) based on which it is determined the color included in or approximate to the analyzed color gamut to be emitted may be stored in the memory 192.

The micro controller 193 determines the second color coordinates of the liquid crystal panel 110 required for the liquid crystal panel 110 to display the image data based on the determined first color coordinates. The micro controller 193 controls the image display 1150 based on the determined local dimming area and the first color coordinates of the blue light and the yellow light to be emitted by the light sources 211.

Gray level values of white light determined in a manufacturing phase of the liquid crystal panel 110 may be stored in advance in the memory 192. For example, gray level values of white light of a liquid crystal panel from a manufacturer A may be (255, 250, 245), and gray level values of white light of a liquid crystal panel from a manufacturer B may be (255, 255, 247). When the color coordinates of blue light of the first light source 211a and yellow light of the second light source 211b are determined, the micro controller 193 may additional take into account a characteristic of the liquid crystal panel 110 determined in the manufacturing phase. That is, the micro controller 193 determines the first color coordinates of color to be emitted by the light source module 210 by taking into account the characteristic of the liquid crystal panel 110.

Various embodiments in which the micro controller 193 determines the first color coordinates of color to be emitted by the backlight unit 200 will now be described in detail.

In addition to the components described in FIG. 10, the display device 100 may further include various other components that are used for the operation of the display device 100, and each component may be separated or omitted.

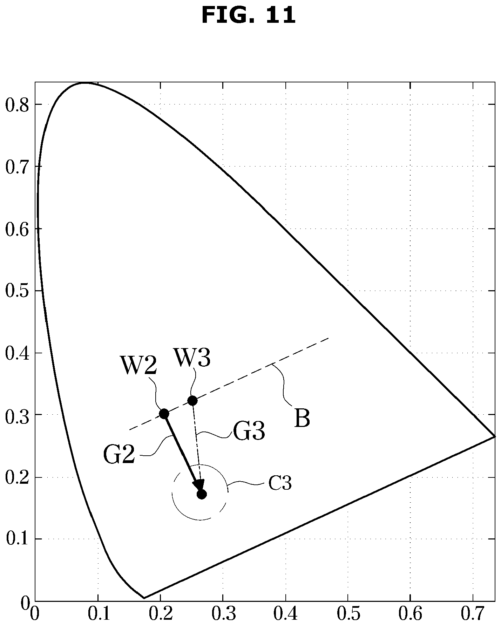

FIG. 11 is a diagram for determining first color coordinates of color to be emitted by a backlight unit.

The display device 100 analyzes a color gamut corresponding to a local dimming area of image data. For example, the display device 100 may analyze that a color gamut C3 corresponding to the local dimming area matches violet color.

When the backlight unit 200 included in the display device 100 emits blue light and yellow light, the color coordinates of color to be emitted by the backlight unit 200 may be located in the straight line B as shown in FIG. 11. The display device 100 determines color coordinates W2, W3 approximate to the analyzed color gamut C3 to be candidates of the first color coordinates.

The display device 100 may determine the color coordinates W2 at which the straight line B is perpendicular to the color gamut C3 to be the first color coordinates for which to control the backlight unit 200. However, the disclosure is not limited to this example, and the display device 100 may not determine the first color coordinates as the color coordinates W2 that has the smallest gray level difference from the color gamut C3.

For example, the display device 100 may determine the color coordinates W3 to be the first color coordinates, based on which the backlight unit 200 is to be controlled, further based on the gray level value of white light of the liquid crystal panel 110 that is determined in the manufacturing phase. That is, the display device 100 may not necessarily determine color coordinates located at the shortest distance to the color gamut C3 to be the first color coordinates to be emitted by a light source by controlling the backlight unit 200.

Although not shown, the display device 100 may determine various first color coordinates based on a user command (e.g., a command about brightness) entered by the user, other criteria transmitted from a manufacturer server through the communicator interface 170 or an individual characteristic included in the image data.

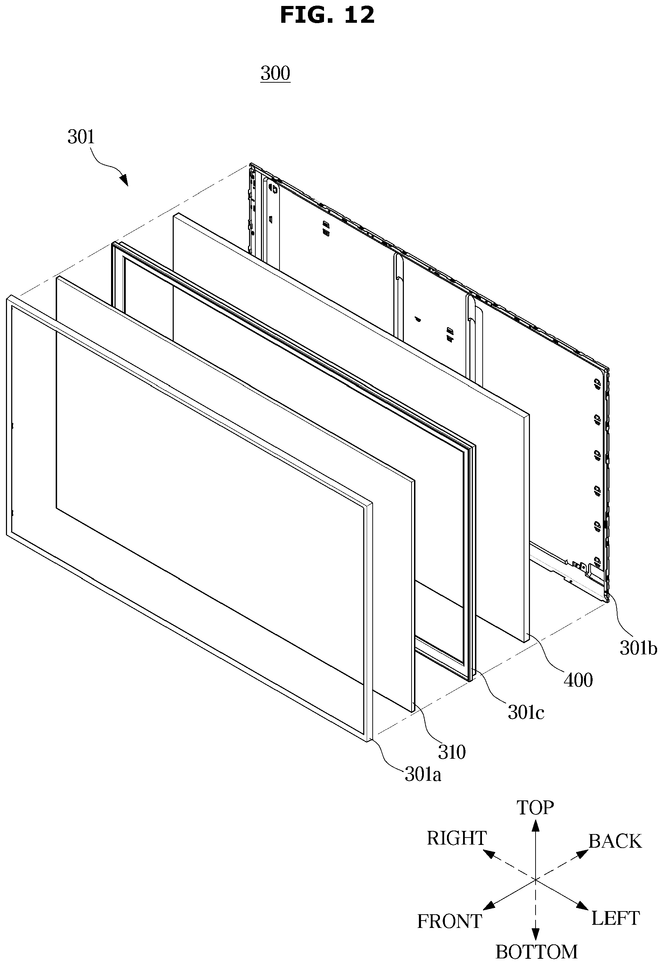

FIGS. 12, 13, 14A, and 14B show a display device, according to embodiments. In an embodiment, a display device 300 in a direct type may be provided, which does not include a light guide plate.

The display device 300 may include a first light source 421a that emits blue light, a second light source 421b that emits red light, and a third light source 421c that emits green light. Furthermore, the display device 300 may include the first light source 421a for emitting blue light and a second light source 421d for emitting yellow light.

FIG. 12 is an exploded view of a display device, according to another embodiment.

Referring to FIG. 12, the display device 300 includes a main body 301 and a supporter arranged under the main body 301 for supporting the main body 301.

The main body 301 forms an exterior of the display device 300, and components of the display device 300 to display an image or perform various functions may be included in the main body 301.

Various kinds of components to produce an image may be included in the main body 301. Specifically, the display device 300 may also include a backlight unit 400 for producing and emitting sheet light forward, and a liquid crystal panel 310 for generating the image based on the light emitted from the backlight unit 400.

The main body 301 may include a front chassis 301a, a back chassis 301b, and a mold frame 301c to support and fix the liquid crystal panel 310 and the backlight unit 400.

The front chassis 301a is shaped like a plate with an opening formed on the front, and the image is presented through the front opening.

The back chassis 301b has the form of a box with an open front for receiving the liquid crystal panel 310 and the backlight unit 400 of the display device 300.

The mold frame 301c may be arranged between the front chassis 301a and the back chassis 301b. Specifically, the mold frame 301c may be arranged between the liquid crystal panel 310 and the backlight unit 400 to separate and fix the liquid crystal panel 310 and the backlight unit 400.

The components overlapping with those of the display device 100 in the above-described embodiment will not be described again.

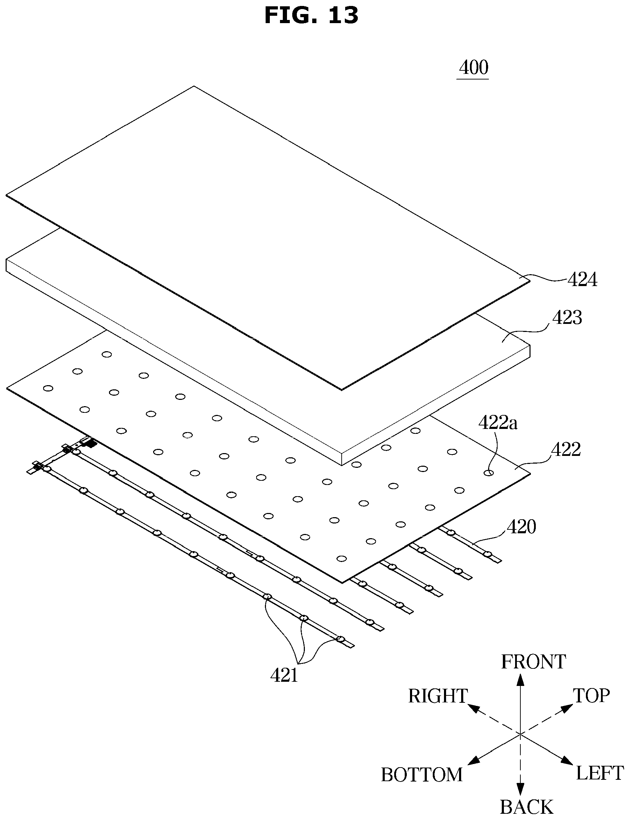

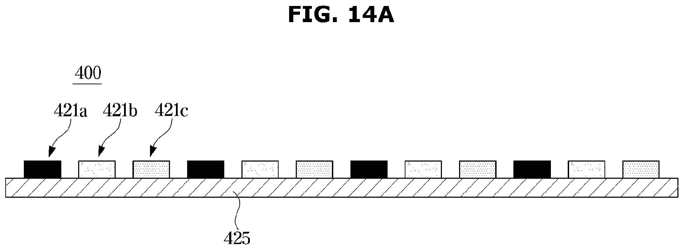

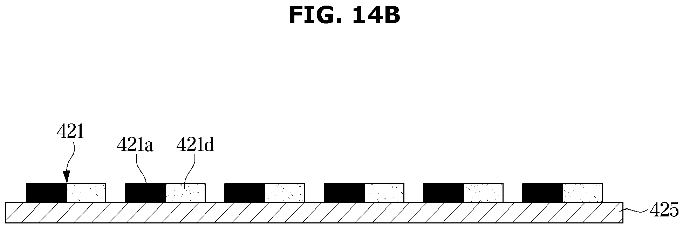

FIG. 13 is an exploded view of the backlight unit 400 included in the display device 300, according to another embodiment, and FIG. 14A is a schematic diagram of light sources to be applied to the display device 300, according to an embodiment. FIG. 14B is a schematic diagram of light sources, according to another embodiment.

In an embodiment, the display device 300 includes a direct-type backlight unit.

The direct-type backlight unit 400 as shown in FIG.13 may include a light emitting module 420 including a plurality of light sources 421 to produce light, a reflecting sheet 422 for reflecting light, a diffuser plate 423 for diffusing light, and an optical sheet 424 for enhancing light brightness.

The light sources of the light source module 420 may be uniformly located on a rear portion (e.g., the rearmost side) of the backlight unit 400 and may emit light toward the front of the backlight unit 400 (or the front direction as shown in FIG. 13).

The light source module 420 may include a first light source 421a that emits blue light, a second light source 421b that emits red light, and a third light source 421c that emits green light, as shown in FIG. 14A.

Referring to FIG. 14A, the plurality of light sources 421a, 421b, and 421c may be arranged on a substrate 425 in a predefined pattern that allows the light emitted from the light sources 421a, 421b, and 421c to have as uniform brightness. Specifically, the plurality of light sources 421a, 421b, and 421c may be equidistantly arranged.

The light source module 420 may also include the first light source 421a that emits blue light and a second light source 421d that emits yellow light, as shown in FIG. 14B.

Referring to FIG. 14B, the plurality of light sources 421a and 421d may be arranged on the substrate 425 in such a form that two light sources 421a and 421d are provided in a single chip. A chip is placed at a predefined distance from another chip.

Apart from the embodiments shown in FIGS. 14A and 14B, the plurality of light sources may be arranged on the light source module 420 in various forms that allow the display device 300 to be able to perform color dimming to adjust the first color coordinates of color emitted from the light source module 420.

The light sources 421 may employ low calorific LEDs or a CCFL. In the case that the light sources of the display device 300 are LEDs, the light sources 421a, 421b, and 421c of FIG. 14A may include red LEDs for emitting red light, green LEDs for emitting green light, and blue LEDs for emitting blue light, and the light sources 421a and 421d as shown in FIG. 14B may include blue LEDs for emitting blue light and yellow LEDs for emitting yellow light.

A supporting body (or the substrate) 425 may fix the plurality of light sources 421 and the substrate 425 to prevent the light sources 421 from being moved. In addition, the supporting body 425 may supply power to each of the light sources 421 to emit light.

The supporting body 425 may be in the plural along with the arrangement of the plurality of light sources 421. The supporting body 425 may include a synthetic resin with conductive power supply lines formed therein or a PCB to fix the plurality of light sources 421 and supply power to the light sources 421.

A reflecting film may reflect the light traveling backward from the backlight unit 400 to the front. In FIG. 13, a sheet including the reflecting film may be called the reflecting sheet 422.

Through holes 422a are formed on the reflecting sheet at positions corresponding to the light sources 421. Furthermore, the light sources 421 may pass the through holes 422a and travel forward from the reflecting sheet 422. As the light sources 421 may emit light traveling from a front surface of the reflecting sheet 422 in a plurality of different directions, some of the light emitted from the light sources 421 may travel backward toward the light sources 421. The reflecting film of the reflecting sheet 422 may reflect the light, travelling backward toward the light sources 421, toward the front of the backlight unit 400.

The diffuser plate 423 may be arranged in front of the light emitting module 420 and the reflecting sheet 422 to uniformly diffuse the light emitted from the light sources 421 of the light emitting module 420.

As described above, the light sources 421 are located in a plurality of places on the rear portion of the backlight unit 400. Although the light sources 421 are arranged on the rear portion of the backlight unit 400 at regular intervals, brightness of the light sources 421 differs by positions of the light sources 421.

To eliminate the difference in brightness due to positions of the light sources 421, the diffuser plate 423 may diffuse the light emitted from the light sources 421 inside the diffuser plate 423. The diffuser plate 423 may receive non-uniform light from the light sources 421 and emit uniform light toward the front of the backlight unit 400. Specifically, the diffuser plate 423 may have a color of milk (or opaque) to prevent the loss of uniformity of brightness by having the light emitted from the light sources 421 directly pass the diffuser plate 423, and the light transmittance of the diffuser plate 423 may be about 50% to about 70%.

The diffuser plate 423 may include a core to transmit and diffuse the light and a pair of skins to protect the core and diffuse the light. The core may employ poly-methyl methacrylate (PMMA) or transparent polycarbonate (PC) with a diffuser agent added thereto for light diffusion. The skins may employ poly-methyl methacrylate (PMMA) or transparent polycarbonate (PC) with a sunscreen agent added thereto for protecting the core.

In addition, the backlight unit 400 may include various sheets without limitations.

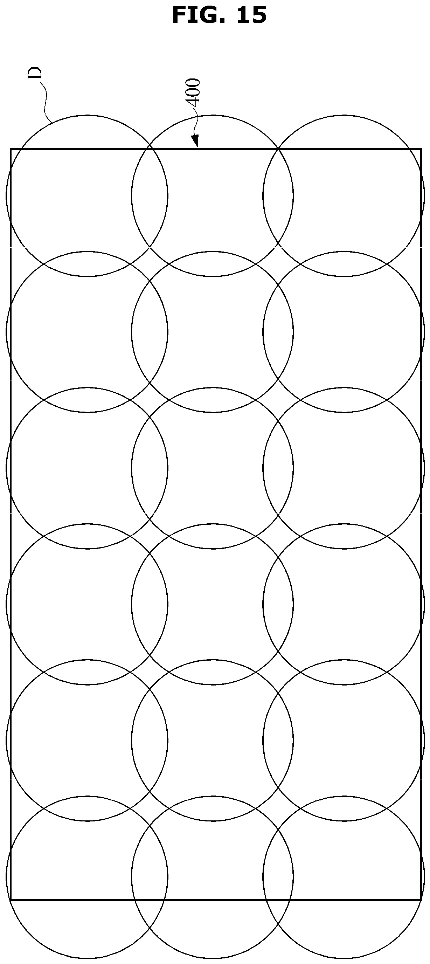

FIG. 15 is a view for describing a local dimming area controlled by a backlight unit.

Referring to FIG. 15, the display device 300 performs color dimming control and brightness dimming control for each local dimming area D including a certain number of light sources 421.

The display device 300 analyzes a color gamut of image data corresponding to the local dimming area D. For example, from the image data corresponding to an area indicated by the local dimming area D, the display device 300 may analyze color that is distributed the most in the local dimming area D. When it is analyzed that the color that is distributed the most corresponds to first color coordinates of particular red, the display device 300 controls the backlight unit 400 to emit red light having the first color coordinates. Specifically, unlike the above-described embodiment, the display device 300 in an embodiment may perform color dimming based on color coordinates located in the analyzed color gamut through the light sources 421 capable of emitting three primary colors.

The display device 300 may determine second color coordinates of color to be emitted by the liquid crystal panel 310 based on the first color coordinates and image data, and display the image data by controlling the liquid crystal panel 310 based on the second color coordinates.

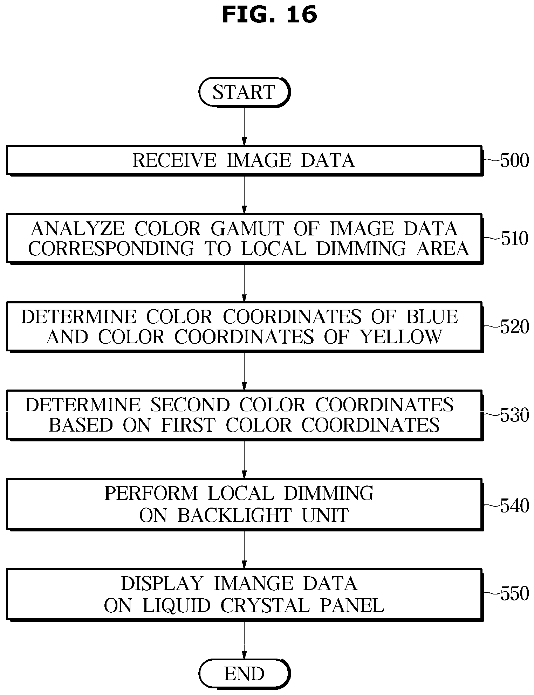

FIG. 16 is a flowchart illustrating a controlling method of a display device, according to an embodiment.

Referring to FIG. 16, in an embodiment, the display device 100 receives image data, in 500.

The image data may be received in an image signal through the content receiver 1140, the image signal being converted to the image data by the image processor 191.

The display device 100 analyzes a color gamut of image data corresponding to a local dimming area, in 510.

The display device 100 determines the color gamut based on color distributed the most on average in the local dimming area or based on color of a primary object recognized through object recognition in an image corresponding to the local dimming area. There may be various methods of analyzing color gamut by the display device 100, and the analysis criterion may be changed through the communicator interface 170 or the user input interface 130.

The display device 100 determines color coordinates of blue light and yellow light, in 520.

In an embodiment, the display device 100 includes the first light source 211a for emitting blue light and the second light source 211b for emitting yellow light. The display device 100 compares the color coordinates of the blue light and the yellow light to be emitted with the color gamut, and then determines color coordinates of the blue light and the yellow light that are included in or approximate to the color gamut.

The display device 100 determines second color coordinates to be emitted by the liquid crystal panel based on the first color coordinates, in 530.

When the backlight unit 200 controls the light source module 210 based on the first color coordinates but the liquid crystal panel 110 does not control gray level values to emit, different data than input data is displayed. Hence, the display device 100 determines the second color coordinates of color to be emitted by the liquid crystal panel based on the image data and the first color coordinates.

The display device 100 performs local dimming on the backlight unit, in 540.

The local dimming control includes both color dimming control based on the first color coordinates and brightness dimming control based on the image data.

The display device 100 displays the image data by controlling the liquid crystal panel 110 based on the second color coordinates, in 550.

Accordingly, the display device 100 may reduce color distortion due to a difference in color between an image viewed by the user from the front of the display device 100 and an image viewed by the user from a side of the display device 100, i.e., due to a difference in a viewing angle while displaying the same image data. Furthermore, the display device 100 may enhance contrast ratios from color contrast, by adjusting color emitted by the backlight unit 200 in a local dimming area.

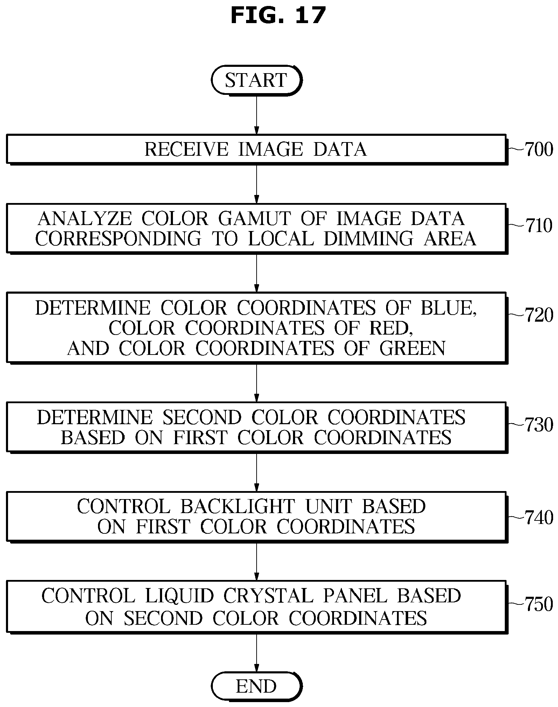

FIG. 17 is a flowchart illustrating a controlling method of a display device, according to another embodiment. Overlapping operations with those in FIG. 16 will be briefly described.

Referring to FIG. 17, the display device 300 receives image data in 700, and analyzes a color gamut of the image data corresponding to a local dimming area in 710.

Once the color gamut is analyzed, the display device 300 determines color coordinates of blue, red, and green to be emitted by the first, second, and third light sources 421a, 421b, and 421c, respectively, which correspond to the local dimming area, in 720.

The color coordinates of blue, red, and green may be determined to be included in the analyzed color gamut, based on a predefined criterion.

The display device 300 determines second color coordinates of the liquid crystal panel based on the determined color coordinates of blue, red, and green, in 730.

There may be various second color coordinates corresponding to the local dimming area that may be determined based on the first color coordinates and image data to display the image data.

The display device 300 controls the backlight unit 400 based on the first color coordinates and controls the liquid crystal panel 310 based on the second color coordinates, in 740 and 750.

Accordingly, the display device 300 may reduce color distortion due to a difference in color between an image viewed by the user from the front of the display device 100 and an image viewed by the user from a side of the display device 100, i.e., due to a difference in a viewing angle, and enhance the contrast ratio.

According to embodiments, a display device and a controlling method of the display device may represent image data without substantial difference in property according to a viewing angle and improve contrast ratios by performing color local dimming as well as brightness local dimming on the backlight unit.

Accordingly, a display device and a controlling method of the display device according to embodiments may reduce color distortion between an image viewed from the front of the display device and an image viewed from a side of the display device by the user.

At least one of the components, elements, modules or units described herein may be embodied as various numbers of hardware, software and/or firmware structures that execute respective functions described above, according to an example embodiment. For example, at least one of these components, elements or units may use a direct circuit structure, such as a memory, a processor, a logic circuit, a look-up table, etc. that may execute the respective functions through controls of one or more microprocessors or other control apparatuses. Also, at least one of these components, elements or units may be specifically embodied by a module, a program, or a part of code, which contains one or more executable instructions for performing specified logic functions, and executed by one or more microprocessors or other control apparatuses. Also, at least one of these components, elements or units may further include or implemented by a processor such as a central processing unit (CPU) that performs the respective functions, a microprocessor, or the like. Two or more of these components, elements or units may be combined into one single component, element or unit which performs all operations or functions of the combined two or more components, elements of units. Also, at least part of functions of at least one of these components, elements or units may be performed by another of these components, element or units. Further, although a bus is not illustrated in the block diagrams, communication between the components, elements or units may be performed through the bus. Functional aspects of the above example embodiments may be implemented in algorithms that execute on one or more processors. Furthermore, the components, elements or units represented by a block or processing operations may employ any number of related art techniques for electronics configuration, signal processing and/or control, data processing and the like.

Although a few embodiments have been shown and described, it would be appreciated by those skilled in the art that changes may be made in embodiments without departing from the principles of the disclosure, the scope of which is defined in the claims.

## Claims

1. A display device comprising:
a liquid crystal panel configured to display an image corresponding to image data;
a backlight unit including a first light source configured to emit blue light and a second light source configured to emit yellow light; and
a controller configured to determine first color coordinates and second color coordinates based on a color gamut of the image data corresponding to a local dimming area, control the backlight unit based on the first color coordinates, and control the liquid crystal panel based on the second color coordinates.

2. The display device of claim 1, wherein the controller is further configured to determine color coordinates of the blue light corresponding to the first color coordinates and color coordinates of the yellow light corresponding to the first color coordinates, based on the color gamut and a predefined criterion.

3. The display device of claim 1 or 2, wherein the controller is further configured to determine the second color coordinates of the liquid crystal panel based on the first color coordinates.

4. The display device of claim 1, 2 or 3, wherein the controller is further configured to control the backlight unit based on a brightness of the image data.

5. The display device of claim 1, wherein the controller is further configured to determine color coordinates of the blue light corresponding to the first color coordinates and color coordinates of the yellow light corresponding to the first color coordinates, based on a gray level value of white light determined in a manufacturing phase of the liquid crystal panel.

6. The display device of any one of the preceding claims, wherein the backlight unit comprises the first light source and the second light source in a single chip.

7. The display device of any one of the preceding claims, wherein the backlight unit comprises a light guide plate configured to diffuse the blue light and the yellow light emitted by the first light source and the second light source, respectively, and guide the blue light and the yellow light toward the liquid crystal panel.

8. A display device comprising:
a liquid crystal panel configured to display an image corresponding to image data;
a backlight unit including a first light source configured to emit a blue light, a second light source configured to emit red light, and a third light source configured to emit green light; and
a controller configured to determine first color coordinates and second color coordinates based on a color gamut of the image data corresponding to a local dimming area, control the backlight unit based on the first color coordinates, and control the liquid crystal panel based on the second color coordinates.

9. The display device of claim 8, wherein the controller is further configured to control the backlight unit such that the determined first color coordinates included in the color gamut are emitted.

10. The display device of claim 8 or 9, wherein the controller is further configured to determine the second color coordinates of the liquid crystal panel based on the first color coordinates.

11. The display device of claim 8, 9 or 10, wherein the controller is further configured to control the backlight unit based on a brightness of the image data.

12. The display device of any one of claims 8 to 11, wherein the controller is further configured to determine color coordinates of the blue light corresponding to the first color coordinates, color coordinates of the red light corresponding to the first color coordinates, and color coordinates of the green light corresponding to the first color coordinates, based on a gray level value of white light determined in a manufacturing phase of the liquid crystal panel.

13. A controlling method of a display device including a first light source configured to emit blue light and a second light source configured to emit yellow light, the method comprising:
receiving image data;
analyzing a color gamut of the image data corresponding to a local dimming area;
determining first color coordinates and second color coordinates based on the color gamut of the image data corresponding to the local dimming area;
controlling the first light source and the second light source based on the first color coordinates; and
controlling a liquid crystal panel of the display device based on the second color coordinates.

14. The method of claim 13, wherein the determining comprises determining the first color coordinates based on the color gamut and a predefined criterion.

15. The method of claim 13 or 14, wherein the determining comprises determining the second color coordinates based on the first color coordinates.
